# EUROPEAN PATENT APPLICATION

(11) **EP 2 337 390 A1**
(43) Date of publication of application: **22.06.2011**
(21) Application number: 09360054.2
(22) Date of filing: 16.12.2009
(51) Int. Cl.: H04W 16/14

(54) **Spectrum reuse**

(71) Applicant: Alcatel Lucent, 75008 Paris (FR)
(72) Inventor: Claussen, Holger, Straffan Co. Kildare (IE); Pivit, Florian, Dublin 15 (IE)
(74) Representative: Leppard, Andrew John

(57) **Abstract**

Apparatus and methods are disclosed. The apparatus is for providing an indication of frequency bands of transmissions being received by a wireless receiver and comprises: a detection unit operable to determine the frequency bands of transmissions being received by the wireless receiver; and a beacon unit operable to generate a beacon signal for transmission to a transmission apparatus, the beacon signal providing an indication of the frequency bands of transmissions being received by the wireless receiver. This enables frequency bands which are not being received by the wireless receiver to be identified for reuse and avoids the risk of interfering with the wireless transmissions being received by the wireless receiver. This helps to increase the extent of frequency reuse that is possible, whilst minimising the potential for interfering with transmissions being received by the wireless receivers. Also, if the power of the beacon signal is similar to the expected power of the reuse transmissions, then if the beacon signal can be received and decoded by a device, it is likely that a transmission from that device could interfere with the wireless receiver.

## Description

### FIELD OF THE INVENTION

The present invention relates to wireless communication apparatus and methods. In particular, embodiments of the present invention relate to apparatus and methods for enabling reuse of frequency bands for wireless communications.

### BACKGROUND OF THE INVENTION

The demand for additional bandwidth for mobile communications is constantly increasing. As the frequency spectrum dedicated to supporting such mobile communications becomes increasingly congested, other parts of the radio spectrum allocated for other uses become attractive candidates to support such communications. In particular, many parts of the radio spectrum currently allocated to support terrestrial broadcast media such as television or radio are attractive candidates for reuse to support mobile communications.

Whilst various techniques have been proposed to help enable such frequency reuse, they each have their own drawbacks which limit their utility.

Accordingly, it is desired to provide improved technique for enabling spectrum reuse.

### SUMMARY

According to a first aspect, there is provided an apparatus for providing an indication of frequency bands of transmissions being received by a wireless receiver, the apparatus comprising: a detection unit operable to determine the frequency bands of transmissions being received by the wireless receiver; and a beacon unit operable to generate a beacon signal for transmission to a transmission apparatus, the beacon signal providing an indication of the frequency bands of transmissions being received by the wireless receiver.

The first aspect recognises that whilst it is possible to reuse frequency bands of transmissions, such as those allocated to terrestrial broadcast media, such reuse can cause a problem for those wireless receivers which are receiving transmissions on those frequency bands. In particular, although the number of receivers which receive transmissions on those frequency bands may in general be decreasing, a number of receivers may still continue to receive transmissions on those frequency bands and frequency reuse of those bands may prevent those receivers from correctly receiving their intended transmissions. Whilst it would be possible to avoid frequency band reuse whenever transmissions on those frequency bands is expected, such an approach may be overly pessimistic and prevent the full extent of reuse that may be possible. In particular, preventing reuse whenever any transmissions on those frequency bands are detected fails to recognise that it may be possible to reuse frequency bands if those transmissions are not being received locally. If the transmissions are not being received locally, then it may be possible perform transmission on those frequency bands since such transmission are unlikely to cause interference and disrupt reception in the wireless receivers. In other words, it may be possible in some regions of the transmission footprint to reuse frequency bands and generate potentially interfering transmissions which, due to the limited range and rapid decay of those interfering signals, enables those signals to be generated without causing detriment to wireless receivers elsewhere within the transmission footprint.

Accordingly, a detection unit is provided which may determine the frequency bands of those transmissions which are currently being received by the wireless receiver. Also, a beacon unit may be provided which provides a beacon signal which indicates the wireless receiver is receiving the transmissions on those frequency bands. In this way, it can be seen that those frequency bands which are actually being received by the wireless receiver can be identified in the beacon signal; such an indication would not normally be possible since such wireless receivers are generally reception-only devices. Also, the beacon signal may indicate those frequency bands from all the potential frequency bands which are actually being received by the wireless receiver. This approach enables those frequency bands which are not being received by the wireless receiver to be identified for reuse and avoids the risk of interfering with the wireless transmissions being received by the wireless receiver. This helps to increase the extent of frequency reuse that is possible, whilst minimising the potential for interfering with transmissions being received by the wireless receivers. Also, if the power of the beacon signal is similar to the expected power of the reuse transmissions, then if the beacon signal can be received and decoded by a device, it is likely that a transmission from that device could interfere with the wireless receiver.

In one embodiment, the detection unit is operable to determine the frequency bands of transmissions being received by the wireless receiver by detecting oscillator signals generated by the wireless receiver. Accordingly, the detection unit may sense signals generated by an oscillator or signal generator within the wireless receiver to provide an indication of the frequency bands of the transmissions being received by that wireless receiver. It will be appreciated that such an oscillator or signal generator will generate signals of particular frequencies related to the frequency bands being received.

In one embodiment, the detection unit is operable to determine the frequency bands of transmissions being received by the wireless receiver by detecting a power status of the wireless receiver. Accordingly, the frequency bands being received may be considered to be all those which are receivable by the wireless receiver when it is in its active state. It will be appreciated that an indication of those frequency bands may be pre-programmable into the detection unit.

In one embodiment, the detection unit is operable to detect the oscillator signals generated by the wireless receiver on an antenna coupling of the wireless receiver. Accordingly, the frequency of the oscillator signals may readily be sensed through the antenna coupling of the wireless receiver. It will be appreciated that this provides a non-intrusive way of detecting the frequency bands being received by the wireless receiver.

In one embodiment, the beacon unit is operable to generate the beacon signal for transmission in the frequency bands of transmissions being received by the wireless receiver. Accordingly, the beacon signal may be transmitted on the frequency bands which are being received by the wireless receiver. Hence, the frequency band of the beacon signal may therefore indicate directly the frequency bands being received by the wireless receiver.

In one embodiment, the beacon unit is operable to generate the beacon signal for transmission in a frequency band associated with the frequency bands of transmissions being received by the wireless receiver. Accordingly, the beacon signal may instead be associated in some way with the frequency bands being received by the wireless receiver. For example, the beacon signal may be transmitted on a frequency band which is offset by a predetermined amount from the frequency band being received by the wireless receiver. Likewise, the frequency band of the beacon signal may be transmitted in a side band of the frequency band being received by the wireless receiver. Hence, the frequency band of the beacon signal itself will provide an indication of the frequency bands being received by the wireless receiver.

In one embodiment, the beacon unit is operable to generate the beacon signal for transmission in a predetermined frequency band. Accordingly, the beacon signal may be transmitted on the same predetermined frequency band irrespective of which frequency bands are being received by the wireless receiver. It will be appreciated that this may simplify the identification of the beacon signal in some arrangements since the presence of the beacon signal can rapidly be identified by seeking to receive it on that predetermined frequency band.

In one embodiment, the beacon unit is operable to transmit the beacon signal using an antenna coupled with the wireless receiver. Accordingly, the beacon signal may be radiated by the antenna coupled to the wireless receiver which helps to ensure that the same game pattern is used for the beacon transmissions as for the wireless reception. Again, this helps to ensure that the beacon signal only covers an area where interference with the wireless receiver is likely. Also, such an arrangement enables the beacon signal to be transmitted without the apparatus requiring its own antenna.

In one embodiment, the beacon unit comprises a switching unit operable to isolate the wireless receiver during transmission of the beacon signal in the frequency bands of transmissions being received by the wireless receiver. Accordingly, time division techniques may be used to insert the beacon signal into the frequency bands of transmission being received by the wireless receiver. A switching device may be used to decouple the wireless receiver during the period when the beacon signal is being transmitted. For example, the beacon signal may be transmitted during an idle portion of the signal being received by the wireless receiver such as, for example, during a guard band, blanking period or an inter-frame period. This enables the beacon signal to be transmitted on the same frequency band without causing undue interference to the operation of the wireless receiver.

In one embodiment, the beacon unit comprises a filter operable to isolate the beacon signal transmitted on the frequency band associated with the frequency bands of transmissions being received by the wireless receiver. Accordingly, a filter arrangement such as, for example, a notch filter, may be provided to prevent the beacon signal being transmitted on an associated frequency band from causing interference on the frequency band being received by the wireless receiver. In this way, any frequency division scheme for insertion and transmission of the beacon signal may be prevented from interfering with the signals being received by the wireless receiver.

In one embodiment, the beacon unit comprises a filter operable to isolate the beacon signal transmitted on the predetermined frequency band. Accordingly, a filter arrangement such as, for example, a notch filter, may be provided to prevent the beacon signal being transmitted on a predetermined frequency band from causing interference on the frequency band being received by the wireless receiver. In this way, any frequency division scheme for insertion and transmission of the beacon signal may be prevented from interfering with the signals being received by the wireless receiver.

In one embodiment, the beacon unit is operable to encode the beacon signal with an indication of frequency bands of transmissions being received by the wireless receiver. Accordingly, the beacon signal may be transmitted with information encoded within it, which identifies the frequency bands being received by the wireless receiver. In that arrangement, rather than needing to derive the frequency bands being received by the wireless receiver from the frequency band of the beacon signal, the frequency bands being received by the receiver are instead derivable from information encoded within the beacon signal itself.

In one embodiment, the detection unit is operable to determine a power level of the transmissions being received by the wireless receiver and the beacon unit is operable to determine from the power level an acceptable interference level per transmitter and to encode the beacon signal with an indication of the acceptable interference level per transmitter. Accordingly, the detection unit may measure the power level of the transmissions being received by the wireless receiver and determine from that power level a maximum level of interference which can be experienced without causing the wireless receiver to be unable to continue to receive the transmissions. For example, it may be determined that the power level being received by the wireless is - 70dBm. It may assumed that, for example, the signal may continue to be able to be decoded in the presence of interference which is no greater than 10dB below the received power level. In this example, that would mean that an interference level of - 80dBm may be tolerated. Accordingly, dependent upon the assumptions of how may interfering transmitters there may be within range, it is possible to then determine an acceptable interference level for each of those transmitters. This information may then be encoded within the beacon signal. In this way, potentially interfering transmitters can be allowed to transmit on the same frequency bands as the transmissions being received the wireless receiver without causing the wireless receiver to cease to be able to receive those transmissions.

In one embodiment, the beacon unit is operable to provide an indication of a power level of the beacon signal. By providing an indication of the power level of the beacon signal, it is possible to determine a path loss of the beacon signal. Accordingly, with knowledge of that path loss, it would be possible for a transmitter to increase the power level of its transmissions taking account of that path loss since its transmissions would also be generally degraded by that path loss amount when they reached the wireless receiver. Returning to the above example, if the beacon signal encoded an indication that it was being transmitted with a power of 20dBm and it was received with a power of -70dBm, then the path loss may be determined to be 90dB. Accordingly, if the maximum interference level per transmitter was set to be -80dBm then the signal transmitted by the transmitter could be at 10dB since, due the to 90dB path loss, that signal received at the wireless receiver would still be no more than -80dBm.

In one embodiment, the beacon unit is operable to transmit the beacon signal at a predetermined power level. Hence, if the beacon signal was always transmitted with a predetermined power level, then the path loss to the wireless receiver can readily be established directly from the received power level of the beacon signal. For example, if beacon signals were always transmitted at 20dBm, then the difference between that and the received power level would directly indicate the path loss.

According to a second aspect, there is provided a method of providing an indication of frequency bands being received by a wireless receiver, the method comprising the steps of: determining the frequency bands of transmissions being received by the wireless receiver; and generating a beacon signal for transmission to a transmission apparatus, the beacon signal providing an indication of the frequency bands of transmissions being received by the wireless receiver.

In one embodiment, the step of determining comprises detecting oscillator signals generated by the wireless receiver.

In one embodiment, the step of determining comprises detecting a power status of the wireless receiver.

In one embodiment, the step of generating comprises generating the beacon signal for transmission in the frequency bands of transmissions being received by the wireless receiver.

In one embodiment, the step of generating comprises generating the beacon signal for transmission in a frequency band associated with the frequency bands of transmissions being received by the wireless receiver.

in one embodiment, the step of generating comprises generating the beacon signal for transmission in a predetermined frequency band.

In one embodiment, the method comprises the step of isolating the wireless receiver during transmission of the beacon signal in the frequency bands of transmissions being received by the wireless receiver.

In one embodiment, the method comprises the step of isolating the wireless receiver during transmission of the beacon signal on the frequency band associated with the frequency bands of transmissions being received by the wireless receiver.

In one embodiment, the method comprises the step of isolating the wireless receiver during transmission of the beacon signal on the predetermined frequency band.

In one embodiment, the method comprises the step of encoding the beacon signal with an indication of frequency bands of transmissions being received by the wireless receiver.

In one embodiment, the method comprises the steps of: determining a power level of the transmissions being received by the wireless receiver; determining from the power level an acceptable interference level per transmitter; and encoding the beacon signal with an indication of the acceptable interference level per transmitter.

In one embodiment, the method comprises the step of providing an indication of a power level of the beacon signal.

In one embodiment, the method comprises the step of transmitting the beacon signal at a predetermined power level.

According to third aspect, there is provided an apparatus operable to provide transmissions to wireless reception equipment, the apparatus comprising: a beacon signal detection unit operable to detect a beacon signal indicative of frequency bands of transmissions being received by a wireless receiver; and a beacon signal processing unit operable to determine from the beacon signal the frequency bands being received by a wireless receiver and to prevent the transmissions to the wireless reception equipment from preventing the wireless receiver from receiving the transmissions on the frequency bands. Accordingly, an apparatus it provided which may perform wireless transmissions to reception equipment. A beacon signal detection unit may be provided which receives beacon signals which provide an indication of frequency bands of any transmissions being received by a wireless receiver. A beacon signal processing unit may determine from that beacon signal those frequency bands which are being received by the wireless receiver and may prevent transmissions from the apparatus to wireless reception equipment from causing the wireless receiver to fail to receive its transmissions on those frequency bands. Hence, it can be seen that a transmitter which is in the vicinity of the wireless receiver may detect the presence of a beacon signal and so take ameliorative action to ensure that its transmissions do not cause sufficient interference to prevent the wireless receiver from continuing to receive its transmissions. It will be appreciated that this enables frequency bands to be reused for other transmissions despite the presence of other transmissions on those frequency bands when it can be established that those other transmissions are unlikely to be affected by such reuse.

In one embodiment, the beacon signal detection unit is operable to receive the beacon signal on a beacon signal frequency band and the beacon signal processing unit is operable to determine frequency bands of transmissions being received by the wireless receiver from the beacon signal frequency band. Accordingly, the beacon signal processing unit is able to determine the frequency bands of the transmissions being received by the wireless receiver from the frequency band of the beacon signal.

In one embodiment, the beacon signal processing unit is operable to determine that the frequency band of transmissions being received by the wireless receiver is the beacon signal frequency band. Accordingly, the beacon signal processing unit may determine that the frequency bands being received by the wireless receiver correspond to the frequency band of the beacon signal itself.

In one embodiment, the beacon signal processing unit is operable to determine that the frequency bands of transmissions being received by the wireless receiver are frequency bands associated with the beacon signal frequency band. Accordingly, the beacon signal processing unit may determine that the frequency bands of the transmissions being received from the wireless receiver are associated with the frequency band of the beacon signal.

In one embodiment, the beacon signal processing unit is operable to determine that the frequency bands of transmissions being received by the wireless receiver are frequency bands identified by an indication encoded in the beacon signal. Accordingly, rather than the frequency band of the beacon signal itself providing an indication of the frequency bands of the transmission being received by the wireless receiver, the beacon signal may instead encode information which identifies those frequency bands being received by the wireless receiver.

In one embodiment, the beacon signal provides an indication of an acceptable interference level per transmitter and the beacon signal processing unit is operable to determine from the acceptable interference level per transmitter whether transmissions to the wireless reception equipment on the frequency bands of transmissions being received by the wireless receiver would prevent the wireless receiver from receiving the frequency bands. Accordingly, the power level of transmissions being received by the wireless receiver may be extracted from information encoded in the beacon signal and the apparatus may determine whether its transmission would interfere with those transmissions being received by the wireless receiver. For example, if the apparatus requires to perform transmissions at a power level which is significantly greater than the maximum interference level per transmitter, then it may not be possible for the apparatus to perform those transmissions on those frequency bands. In such a situation, the apparatus may choose to make those transmissions on another frequency band which does not cause unacceptable interference to the wireless receiver.

In one embodiment, the beacon signal processing unit is operable to derive from the beacon signal a path loss to the wireless receiver and to determine from the path loss and the power level of signals being received by the wireless receiver a maximum transmission power of the transmissions to the wireless reception equipment on the frequency bands of transmissions being received by the wireless receiver which enables the wireless receiver to receive the transmissions on the frequency bands. Accordingly, the beacon signal may also enable the apparatus to determine a path loss to the wireless receiver. This path loss, together with the acceptable interference level per transmitter may enable a determination to be made of the maximum transmission power of transmissions to the wireless reception equipment on those frequency bands. For example, if the beacon signal indicates acceptance interference level of 20dB and the beacon signal indicates a path loss of 10dB, then the apparatus may perform transmissions at a power level which is less than 30dB without causing unacceptable interference in the wireless receiver.

In one embodiment, the beacon signal processing unit is operable, in the event that the maximum transmission power is determined to be insufficient to enable the transmissions to the wireless reception equipment on the frequency bands of transmissions being received by the wireless receiver to be received by the wireless reception equipment, to transmit the transmissions to the wireless reception equipment on a frequency band other than the on the frequency bands of transmissions being received by the wireless receiver. Accordingly, when it is determined that the transmission power would be greater than that which would cause unacceptable interference in the wireless receiver, the apparatus may select a frequency band which is not being received by the wireless receiver.

In one embodiment, the beacon signal detection unit is operable to detect a plurality of beacon signals indicative of frequency bands of transmissions being received by a plurality of wireless receivers. The beacon signal processing unit may be operable to determine from the plurality of beacon signals the frequency bands being received by the plurality of wireless receivers and to prevent the transmissions to the wireless reception equipment from preventing the plurality of wireless receivers from receiving the transmission on the frequency bands.

According to a fourth aspect, there is provided a method of providing transmissions to wireless reception equipment, the method comprising the steps of: detecting a beacon signal indicative of frequency bands of transmissions being received by a wireless receiver; determining from the beacon signal the frequency bands being received by a wireless receiver; and preventing the transmissions to the wireless reception equipment from preventing the wireless receiver from receiving the transmissions on the frequency bands.

In one embodiment, the step of detecting comprises receiving the beacon signal on a beacon signal frequency band and the step of determining comprises determining frequency bands of transmissions being received by the wireless receiver from the beacon signal frequency band.

In one embodiment, the step of determining comprises determining that the frequency band of transmissions being received by the wireless receiver is the beacon signal frequency band.

In one embodiment, the step of determining comprises determining that the frequency band of transmissions being received by the wireless receiver are frequency bands associated with the beacon signal frequency band.

In one embodiment, the step of determining comprises determining that the frequency band of transmissions being received by the wireless receiver are frequency bands identified by an indication encoded in the beacon signal.

In one embodiment, the beacon signal provides an indication of an acceptable interference level per transmitter and the method comprises the step of: determining from the acceptable interference level per transmitter whether transmissions to the wireless reception equipment on the frequency bands of transmissions being received by the wireless receiver would prevent the wireless receiver from receiving the frequency bands.

In one embodiment, the method comprises the steps of: deriving from the beacon signal a path loss to the wireless receiver; and determining from the path loss and the power level of signals being received by the wireless receiver a maximum transmission power of the transmissions to the wireless reception equipment on the frequency bands of transmissions being received by the wireless receiver which enables the wireless receiver to receive the transmissions on the frequency bands.

In one embodiment, the method comprises the step of: in the event that the maximum transmission power is determined to be insufficient to enable the transmissions to the wireless reception equipment on the frequency bands of transmissions being received by the wireless receiver to be received by the wireless reception equipment, transmitting the transmissions to the wireless reception equipment on a frequency band other than on the frequency bands of transmissions being received by the wireless receiver.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates an example deployment of apparatus according to one embodiment;
Figure 2 illustrates an arrangement of a receiver according to one embodiment;
Figure 3 illustrates in more detail the arrangement of a beacon unit according to one embodiment;
Figure 4 illustrates a relationship between frequency bands and beacon signals;
Figure 5 illustrates an alternative arrangement of a beacon unit according to one embodiment;
Figure 6 illustrates the insertion of a beacon signal; and
Figure 7 illustrates the arrangement of an apparatus for receiving the beacon signal according to one embodiment.

### DESCRIPTION OF THE EMBODIMENTS

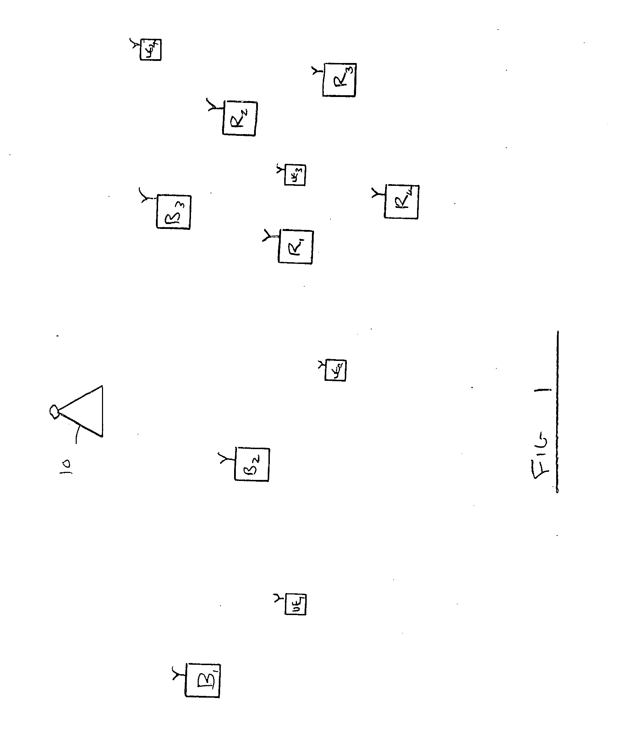

Figure 1 illustrates an example deployment of apparatus according to one embodiment. In this embodiment, there is provided a broadcast antenna 10 which broadcasts various signals which are received by wireless receivers R₁ to R₄. The broadcast antenna 10 provides analogue and digital terrestrial television broadcasts, together with analogue and digital radio broadcasts. The receivers R₁ to R₄ receive the television and/or radio broadcasts. The broadcasts are made on different frequency bands and the receivers R₁ to R₄ tune to the appropriate frequency bands in response to user requests in order to receive and decode the appropriate signals.

A number of cellular network base stations B₁ to B₃ are provided within the broadcast coverage area of the broadcast transmitter 10. The base stations B₁ to B₃ support wireless communications with user equipment UE₁ to UE₄ which are also distributed throughout the broadcast area of the broadcast antenna 10.

As will be explained in more detail below, an apparatus is provided either within the wireless receivers R₁ to R₄ or as a retrofit addition to existing wireless receivers which identifies the frequency bands of transmissions being received by that receiver. This apparatus then transmits a beacon signal which is receivable by network nodes within the cellular communications network such as the base stations B₁ to B₃ and/or the user equipment UE₁ to UE₄ which identifies to those network nodes the frequency bands of the transmissions being received by the receiving equipment R₁ to R₄. This then enables the network nodes to determine whether it is possible to make transmissions on those frequency bands or whether it is necessary to make those transmissions on a frequency band which is not being used by a receiver to avoid potentially having the transmissions being received from being disrupted. In this way, network nodes of the wireless communications system can reuse frequency bands when such reuse will not cause a receiver to cease to receive the transmissions it requires from the broadcast antenna 10. For example, it may be that base stations B₁ and B₂, together with user equipment UE₁ may be able to reuse any of the frequency bands being utilised by broadcast transmitter 10 since such reuse is unlike to interfere with any of the receivers R₁ to R₄ as transmissions made by those network nodes is likely to have decayed prior to reaching receivers R₁ to R₄ due to path loss. However, user equipment UE₂ may be prevented by the beacons signals transmitted from receivers R₁ and R₄ from transmitting on the frequency band of transmissions currently being received by those receivers. Likewise, user equipment UE₃ may be prevented from performing transmissions on the frequency bands of transmissions being received by each of receivers R₁ to R₄. Finally, user equipment UE₄ may only be prevented from performing transmissions on frequency bands of the transmissions being received by receiver R₂. The arrangement of the apparatus which provides these beacon signals will now be described in more detail.

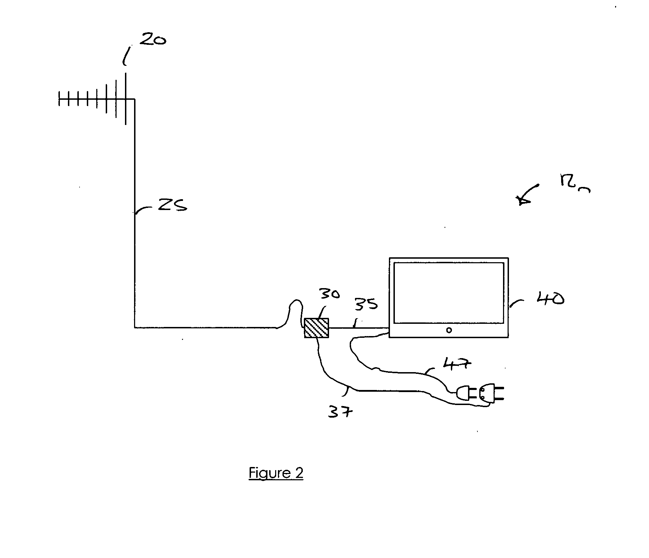

Figure 2 illustrates an arrangement of a receiver, generally Rₙ according to one embodiment. In this arrangement, it can be seen that there is provided an antenna 20 which receives the broadcast transmissions from the broadcast transmitter 10. The antenna is coupled via a cable 25 to a beacon apparatus, 30. The beacon apparatus is then coupled via a cable 35 with a TV receiver 40. The beacon unit 30 is powered via a power connection 37. The TV receiver is powered via a power connection 47 which couples with the beacon unit power connection 37.

Accordingly, it can be seen that the beacon unit 30 can be provided as a retrofit unit which is installed in-line between the antenna 20 and the receiver 40. However, it will be appreciated that the beacon unit 30 may be incorporated directly within the receiver 40, within the antenna 20 or as part of any antenna amplification system (not shown). Also, although this illustrative arrangement is directed to an implementation in a television broadcast environment, it will be appreciated that a similar arrangement could be used for a radio receiver or other reception apparatus of a broadcast signal.

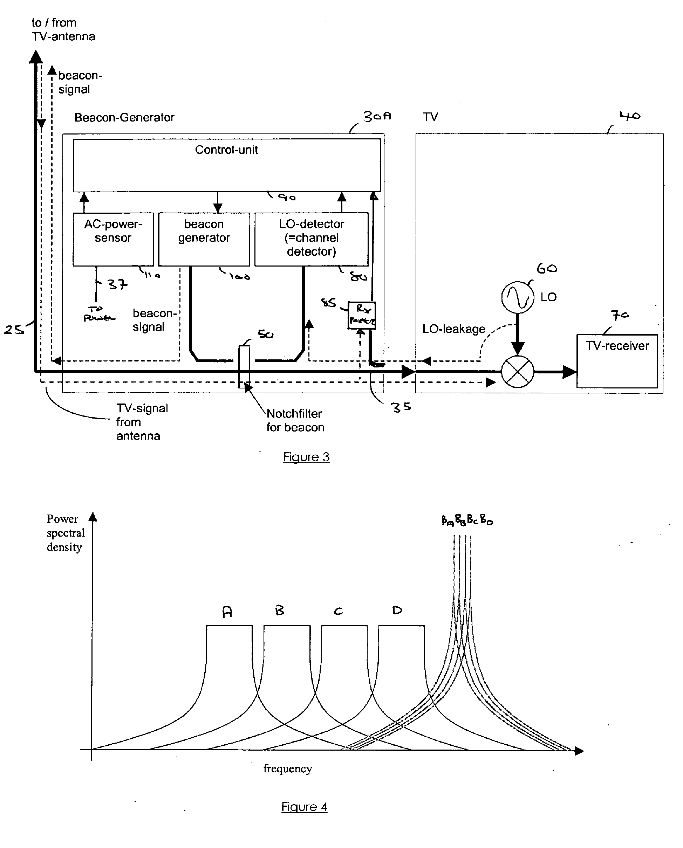

Figure 3 illustrates in more detail the arrangement of a beacon unit according to one embodiment. In this embodiment, the beacon unit 30A is operable to transmit a beacon signal on a frequency band which is associated with the frequency band of the transmissions from the broadcast antenna 10 being received by the TV receiver 70, as shown in more detail in Figure 4. In this arrangement, the transmission signals from the broadcast antenna 10 are received via the antenna (not shown), the antenna coupling 25, through a notch filter 50 and onto the TV receiver 70 via the coupling 35.

A local oscillator 60 within the receiver 40 is tuned to the frequency band of the transmissions which it is desired to be decoded by the receiver 40. The signal from the local oscillator 60 interacts with the broadcast signals received over the coupling 35 and are fed to the TV receiver 70. However, oscillations from the local oscillator 60 appear as leakage, which can be sensed by the beacon unit 30A on the coupling 35. Accordingly, a local oscillator detector 80 within the beacon unit 30A detects the presence of the local oscillator leakage and, from the frequency of those oscillations, is able to determine the frequency bands of the transmissions being received by the receiver 40. A control unit 90 provides this information to a beacon generator 100 _{.} which then generates a beacon signal at an associated frequency which is then transmitted over the coupling 25 to the antenna 20. The antenna 20 then radiates the beacon signal which may then be sensed by apparatus within the range of that beacon signal. The presence of the notch filter 50 helps to ensure that the beacon signal does not cause interference on the frequency channels being received by the receiver 40.

Hence, in this arrangement, should the local oscillator detector 80 determine that transmissions are being received on frequency band A as illustrated in Figure 4, then the control unit 90 will cause the beacon generator 100 to generate the associated beacon signal B_{A} on a frequency band associated with frequency band A. Likewise, should the local oscillator detector 80 determine that the receiver 40 is receiving transmissions on the frequency band C, then the control unit 90 will cause the beacon generator 100 to generate the beacon signal B_{c} on a frequency band associated with frequency band C. It can be seen that apparatus which sense the presence of the beacon signal can readily determine from the frequency of that beacon signal the frequency bands being received by the receiver 40.

Should local oscillation detection not be possible, then instead the AC power sensor 110 may simply detect when the receiver 40 is powered or not. In the event that the receiver 40 is not powered, then the control unit 90 will cause the beacon generator 100 not to generate any beacon signals. However, if the AC power sensor 110 determines that the receiver 40 is powered, then the control unit 90 will cause the beacon generator 100 to transmit each of the beacons signals B_{A} to B_{D}. Although this approach is pessimistic, because it assumes that all possible frequency bands are being received by the receiver 40, it nevertheless ensures that frequency reuse in the vicinity of the receiver 40 does not result in transmissions being received by the receiver 40 from being blocked.

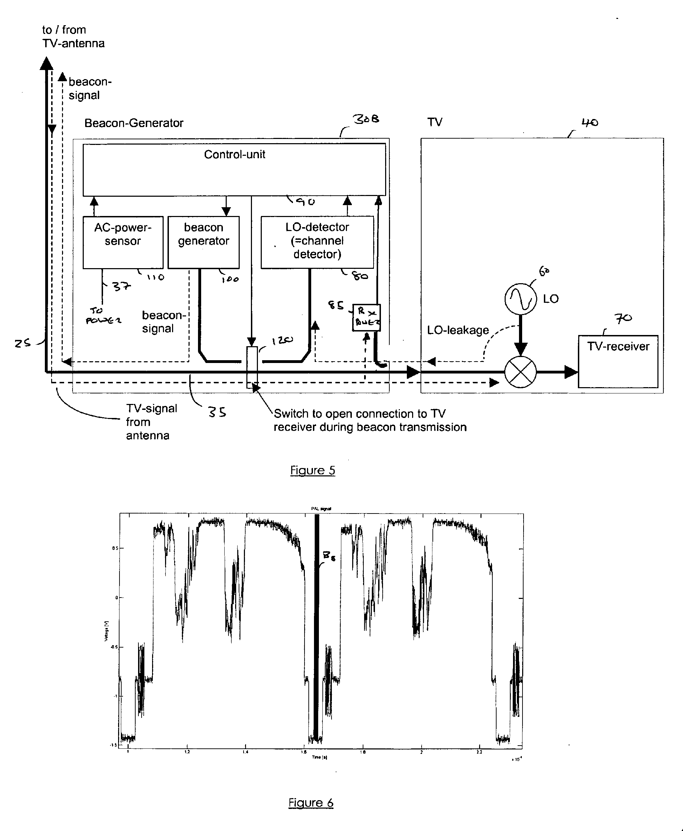

Figure 5 illustrates an alternative arrangement of a beacon unit according to one embodiment. The functionality and arrangement of beacon unit 30B is similar to that of beacon unit 30A, except that a switch unit 120 is provided instead of the notch filter 50.

In this arrangement, the beacon unit 30B transmits the beacon signal Bₛ on the same frequency bands as the transmissions being received by the receiver 40.

The local oscillator detector 80 detects the transmissions being received by the receiver 40 and causes the beacon generator to transmit a beacon signal Bₛ on that frequency band. The transmission of that beacon signal Bₛ is timed to occur at a period which causes no disruption to the reception of the transmissions at the receiver 40. Accordingly, during that period, the control unit 90 causes the switch 120 to decouple the coupling 35 from the coupling 25 during the transmission of the beacon signal Bₛ in order that the beacon signal Bₛ is not received by the receiver 40. The timing of the beacon signal Bₛ may be such that it occurs at an interframe blanking period of a TV signal such as that illustrated in Figure 6, the beacon signal Bₛ may be repeated periodically. However, it will be appreciated that transmission of the beacon signal may occur during other lull periods such as, for example, during an idle period, during a guard band or during an interframe period.

In both the embodiments shown in Figures 3 and 5, a reception power detector 85 is provided with functionality to detect the power level of the frequency bands of the transmissions being received by the receiver 40. These power levels may then be provided to the control unit 90. The control unit may contain pre-programmed information relating to the sensitivity of the receiver 40 in these frequency bands. From that sensitivity, the control unit 90 can then determine a maximum level of interference on that frequency band which still enables the receiver 40 to decode the transmissions from the broadcast antenna 10. Also, the control unit 90 may include information relating to the number of possible interfering transmissions that may occur. From this information, the control unit can then determine the maximum interference level of a broadcast signal that can be tolerated on the frequency bands of the transmissions being received by the receiver 40. The control unit 90 then provides that maximum interference level to the beacon generator 100 for encoding in the beacon signal. In this way, the beacon signal provides an indication to recipients of that signal of the maximum interfering power level that can be transmitted on the frequency bands of transmissions being received by the receiver 40 without causing the receiver 40 to be unable to continue to receive those transmissions.

Furthermore, the control unit 90 may be operable to instruct the beacon generator 100 to transmit its beacon signal at a predetermined power level. Alternatively, the control unit 90 may be operable to instruct the beacon generator 100 to encode in the beacon signal the transmission power of that beacon signal. In either event, this enables the recipient of the beacon signal to determine a path loss from the beacon unit and therefore estimate the likely path loss of any transmission from that receiver to the receiver 40. That recipient is thereby enabled to make a judgment of whether it is able to transmit with a higher power than the maximum interference level would suggest due to the path loss that would be experienced by that transmission by the time it reached the receiver 40. For example, if the maximum acceptable interference level encoded within the beacon signal indicates a power level of -80dBm and a path loss of 90dB to the receiver 40 is established, then it may be possible for the recipient of the beacon signal to transmit on the frequency band of the transmissions being received by the receiver 40 at a power level of 10dBm since the 90dB path loss with reduce this back to the maximum interference level of -80dB by the time that transmission reaches the receiver 40.

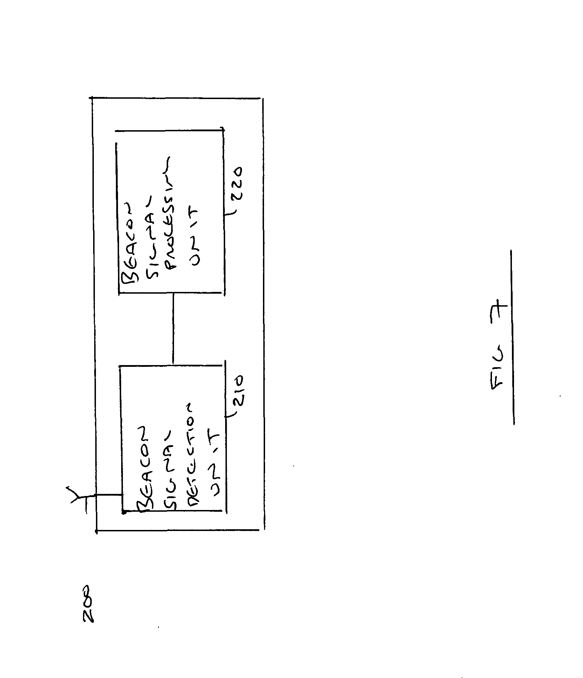

Figure 7 illustrates the arrangement of an apparatus for receiving the beacon signal, such as the base stations B₁ to B₃ or the user equipment UE₁ to UE₄, according to one embodiment. For the sake of clarity, only the main component of this apparatus relating to the receipt and processing the beacon signal are shown.

An antenna 200 is provided which receives the beacon signal. The beacon signal is provided to a beacon signal detection unit 210 which extracts the beacon signal and provides it to a beacon signal processing unit 220. The beacon signal processing unit 220 determines the frequency band of the beacon signal.

If the frequency band of the beacon signal matches either pre-programmed frequency bands which are expected to be allocated for broadcast transmissions or is in an expected sideband, then the beacon signal processing unit determines the frequency bands of transmissions being received by the receiver 40 based on the frequency of the beacon signal itself. For example, if the beacon signal is within any of the frequency bands A to D shown in Figure 4, then the beacon signal processing unit 220 determines that the receiver 40 is receiving transmissions on those frequency bands. Likewise, if the beacon signal is within the sidebands B_{A} to B_{D}, then the beacon signal processing unit 220 determines that the frequency bands of the transmissions being received by the receiver 40 lie within the corresponding frequency band A to D.

If the frequency band of the beacon signal is on a predetermined frequency band allocated to the transmission of such beacon signals, then the beacon signal processing unit 220 decodes information encoded in the beacon signal indicating the frequency bands of the transmissions being received by the receiver 40.

Of course, it will be appreciated that the apparatus may receive more than one beacon signal and may determine cumulatively the frequency bands of transmissions being received by all receivers within its vicinity. Once the frequency bands have been established, the beacon signal processing unit 20 is also operable to determine the interference level which can be tolerated on that frequency band which is encoded in the beacon signal.

Also, the beacon signal processing unit 220 is operable to determine a path loss of the beacon signal from the associated beacon unit. This can be determined in one of two ways. Either the beacon signal processing unit 220 will locate transmission power information encoded in the beacon signal, compare this against the received signal strength and determine the resultant path loss or, if such information is not encoded in the beacon signal, then the beacon signal processing unit 220 assumes that the beacon signal has been transmitted with a predetermined power and compares this against the reception power in order to determine the path loss.

From the maximum acceptable interference level and the path loss, the beacon signal processing unit 220 can determine the maximum power which it can use to transmit signals on those frequency bands. The apparatus will also determine the power level which it needs to transmit its signals with its corresponding network node and can compare this against the maximum power levels for each frequency band. If the required transmission power exceeds the maximum allowable power on any transmission band, then the apparatus will utilise a different transmission band to perform that transmission. For example, if the maximum transmission power allowable on frequency band A is -10dBm and on frequency B is 20dBm, then, if a transmission needs to be made with a network node at 15dBm, the apparatus will determine that it cannot reuse frequency band A since this will cause a receiver to be unable to receive frequency band A from the broadcast antenna 10 and so will instead select frequency band B. Should none of the frequency bands be suitable for transmissions to the network node, then a different part of the radio spectrum (such as that conventionally assigned for cellular communications) may instead be selected.

Accordingly, it can be seen that the present technique provides for protecting a TV or radio receiver against interference from a secondary spectrum user such as mobile communications service. A simple, low-cost device is connected to the TV or radio receiver and enables the receiver to make mobile communications systems in its vicinity aware of itself. The mobile communication devices can scan for active TV receivers that would experience interference from their transmissions, which allows the mobile communications devices to choose different frequency bands for those transmissions, if required. This enable the reuse of TV bands for mobile communications services wherever possible, whilst ensuring that TV receivers are not impaired by these transmissions. Such an approach enables reuse of a huge spectrum for mobile communications applications. In particular, this approach enables efficient secondary reuse of TV frequency bands by enabling a conventional TV receiver to send a beacon signal such that a mobile communications device can sense the presence of an otherwise passive TV receiver and can detect the frequency channels it is receiving to avoid transmissions in this band. To enable the passive TV receiver to provide this functionality, a device is switched between the TV receiver and the antenna connection cable. This device then detects the channel currently received by the TV receiver and uses the TV antenna to send the beacon signal which contains information on the currently received channel to reserve the relevant spectrum in that area. This signal is then received by a mobile communications device that would cause interference and allows it to avoid the transmission on the corresponding frequency. This enables the remaining bandwidth of the TV band to be reused without interfering with any nearby TV receiver.

The beacon unit enables both frequency and time based beacon signal insertion. If the TV is turned on and receiving, the device detects the currently used channel by sensing the local oscillator in the receiver or by any other appropriate means. From the information about the currently received channel, the control unit then generates a beacon signal which is transmitted via the antenna. Hence any communications system that would like to reuse the TV band can derive from the beacon signal which frequency bands it has to avoid or which it needs to use with limited power in order not to cause interference with the TV receiver.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. An apparatus for providing an indication of frequency bands of transmissions being received by a wireless receiver, said apparatus comprising:
a detection unit operable to determine said frequency bands of transmissions being received by said wireless receiver; and
a beacon unit operable to generate a beacon signal for transmission to a transmission apparatus, said beacon signal providing an indication of said frequency bands of transmissions being received by said wireless receiver.

2. The apparatus of claim 1, wherein said detection unit is operable to determine said frequency bands of transmissions being received by said wireless receiver by one of detecting oscillator signals generated by said wireless receiver and detecting a power status of said wireless receiver.

3. The apparatus of claim 1 or 2, wherein said beacon unit is operable to generate said beacon signal for transmission in one of said frequency bands of transmissions being received by said wireless receiver, a frequency band associated with said frequency bands of transmissions being received by said wireless receiver and a predetermined frequency band.

4. The apparatus of claim 3, wherein said beacon unit comprises one of a switching unit operable to isolate said wireless receiver during transmission of said beacon signal in said frequency bands of transmissions being received by said wireless receiver, a filter operable to isolate said beacon signal transmitted on said frequency band associated with said frequency bands of transmissions being received by said wireless receiver, and a filter operable to isolate said beacon signal transmitted on said predetermined frequency band.

5. The apparatus of any preceding claim, wherein said beacon unit is operable to encode said beacon signal with an indication of frequency bands of transmissions being received by said wireless receiver.

6. The apparatus of any preceding claim, wherein said detection unit is operable to determine a power level of said transmissions being received by said wireless receiver and said beacon unit is operable to determine from said power level an acceptable interference level per transmitter and to encode said beacon signal with an indication of said acceptable interference level per transmitter.

7. The apparatus of any preceding claim, wherein said beacon unit is operable to perform at least one of provide an indication of a power level of said beacon signal and transmit said beacon signal at a predetermined power level.

8. A method of providing an indication of frequency bands being received by a wireless receiver, said method comprising the steps of:
determining said frequency bands of transmissions being received by said wireless receiver; and
generating a beacon signal for transmission to a transmission apparatus, said beacon signal providing an indication of said frequency bands of transmissions being received by said wireless receiver.

9. An apparatus operable to provide transmissions to wireless reception equipment, said apparatus comprising:
a beacon signal detection unit operable to detect a beacon signal indicative of frequency bands of transmissions being received by a wireless receiver; and
a beacon signal processing unit operable to determine from said beacon signal said frequency bands being received by a wireless receiver and to prevent said transmissions to said wireless reception equipment from preventing said wireless receiver from receiving said transmissions on said frequency bands.

10. The apparatus of claim 9, wherein said beacon signal detection unit is operable to receive said beacon signal on a beacon signal frequency band and said beacon signal processing unit is operable to determine frequency bands of transmissions being received by said wireless receiver from said beacon signal frequency band.

11. The apparatus of claim 9 or 10, wherein said beacon signal processing unit is operable to determine that said frequency band of transmissions being received by said wireless receiver is one of said beacon signal frequency band, frequency bands associated with said beacon signal frequency band and frequency bands identified by an indication encoded in said beacon signal.

12. The apparatus of claim any one of claims 9 to 11, wherein said beacon signal provides an indication of an acceptable interference level per transmitter and said beacon signal processing unit is operable to determine from said acceptable interference level per transmitter whether transmissions to said wireless reception equipment on said frequency bands of transmissions being received by said wireless receiver would prevent said wireless receiver from receiving said frequency bands.

13. The apparatus of claim 12, wherein said beacon signal processing unit is operable to derive from said beacon signal a path loss to said wireless receiver and to determine from said path loss and said power level of signals being received by said wireless receiver a maximum transmission power of said transmissions to said wireless reception equipment on said frequency bands of transmissions being received by said wireless receiver, thereby enabling said wireless receiver to receive said transmissions on said frequency bands.

14. The apparatus of claim 13, wherein said beacon signal processing unit is operable, in the event that said maximum transmission power is determined to be insufficient to enable said transmissions to said wireless reception equipment on said frequency bands of transmissions being received by said wireless receiver to be received by said wireless reception equipment, to transmit said transmissions to said wireless reception equipment on a frequency band other than said frequency bands of transmissions being received by said wireless receiver.

15. A method of providing transmissions to wireless reception equipment, said method comprising the steps of:
detecting a beacon signal indicative of frequency bands of transmissions being received by a wireless receiver; and
determining from said beacon signal said frequency bands being received by a wireless receiver and preventing said transmissions to said wireless reception equipment from preventing said wireless receiver from receiving said transmissions on said frequency bands.

## Amended claims

### Amended claims in accordance with Rule 137(2) EPC.

**1.** An apparatus (Rₙ) for providing an indication of frequency bands of transmissions being received by a wireless receiver (40), said apparatus comprising:
a detection unit (80, 85) operable to determine said frequency bands of transmissions being received by said wireless receiver using a wireless antenna (20); and
a beacon unit (100) operable to generate a beacon signal for transmission at a predetermined power level using said wireless antenna coupled with said wireless receiver to a transmission apparatus (B₁ - B₃; UE₁ - UE₄), said beacon signal providing an indication of said frequency bands of transmissions being received by said wireless receiver.

**2.** The apparatus of claim 1, wherein said detection unit is operable to determine said frequency bands of transmissions being received by said wireless receiver by one of detecting oscillator signals generated by said wireless receiver and detecting a power status of said wireless receiver.

**3.** The apparatus of claim 1 or 2, wherein said beacon unit is operable to generate said beacon signal for transmission in one of said frequency bands of transmissions being received by said wireless receiver, a frequency band associated with said frequency bands of transmissions being received by said wireless receiver and a predetermined frequency band.

**4.** The apparatus of claim 3, wherein said beacon unit comprises one of a switching unit (120) operable to isolate said wireless receiver during transmission of said beacon signal in said frequency bands of transmissions being received by said wireless receiver, a filter (50) operable to isolate said beacon signal transmitted on said frequency band associated with said frequency bands of transmissions being received by said wireless receiver, and a filter (50) operable to isolate said beacon signal transmitted on said predetermined frequency band.

**5.** The apparatus of any preceding claim, wherein said beacon unit is operable to encode said beacon signal with an indication of frequency bands of transmissions being received by said wireless receiver.

**6.** The apparatus of any preceding claim, wherein said detection unit is operable to determine a power level of said transmissions being received by said wireless receiver and said beacon unit is operable to determine from said power level an acceptable interference level per transmitter and to encode said beacon signal with an indication of said acceptable interference level per transmitter.

**7.** The apparatus of any preceding claim, wherein said beacon unit is operable to provide an indication of a power level of said beacon signal.

**8.** A method of providing an indication of frequency bands being received by a wireless receiver (40), said method comprising the steps of:
determining said frequency bands of transmissions being received by said wireless receiver using a wireless antenna (25); and
generating a beacon signal for transmission at a predetermined power level using said wireless antenna coupled with said wireless receiver to a transmission apparatus (B₁ - B₃; UE₁ - UE₄), said beacon signal providing an indication of said frequency bands of transmissions being received by said wireless receiver.

**9.** An apparatus (B₁ - B₃; UE₁ - UE₄) operable to provide transmissions to wireless reception equipment (UE₁ - UE₄; B₁ - B₃), said apparatus comprising:
a beacon signal detection unit (210) operable to detect a beacon signal indicative of frequency bands of transmissions being received by a wireless receiver (40); and
a beacon signal processing unit (220) operable to determine from said beacon signal said frequency bands being received by said wireless receiver and to prevent said transmissions to said wireless reception equipment from preventing said wireless receiver from receiving said transmissions being received by said wireless receiver on said frequency bands.

**10.** The apparatus of claim 9, wherein said beacon signal detection unit is operable to receive said beacon signal on a beacon signal frequency band and said beacon signal processing unit is operable to determine frequency bands of transmissions being received by said wireless receiver from said beacon signal frequency band.

**11.** The apparatus of claim 9 or 10, wherein said beacon signal processing unit is operable to determine that said frequency band of transmissions being received by said wireless receiver is one of said beacon signal frequency band, frequency bands associated with said beacon signal frequency band and frequency bands identified by an indication encoded in said beacon signal.

**12.** The apparatus of claim any one of claims 9 to 11, wherein said beacon signal provides an indication of an acceptable interference level per transmitter and said beacon signal processing unit is operable to determine from said acceptable interference level per transmitter whether transmissions to said wireless reception equipment on said frequency bands of transmissions being received by said wireless receiver would prevent said wireless receiver from receiving said frequency bands.

**13.** The apparatus of claim 12, wherein said beacon signal processing unit is operable to derive from said beacon signal a path loss to said wireless receiver and to determine from said path loss and said power level of signals being received by said wireless receiver a maximum transmission power of said transmissions to said wireless reception equipment on said frequency bands of transmissions being received by said wireless receiver, thereby enabling said wireless receiver to receive said transmissions on said frequency bands.

**14.** The apparatus of claim 13, wherein said beacon signal processing unit is operable, in the event that said maximum transmission power is determined to be insufficient to enable said transmissions to said wireless reception equipment on said frequency bands of transmissions being received by said wireless receiver to be received by said wireless reception equipment, to transmit said transmissions to said wireless reception equipment on a frequency band other than said frequency bands of transmissions being received by said wireless receiver.

**15.** A method of providing transmissions to wireless reception equipment (UE₁ - UE₄; B₁ - B₃), said method comprising the steps of:
detecting a beacon signal indicative of frequency bands of transmissions being received by a wireless receiver (40); and
determining from said beacon signal said frequency bands being received by said wireless receiver and preventing said transmissions to said wireless reception equipment from preventing said wireless receiver from receiving said transmissions being received by said wireless receiver on said frequency bands.
